Europäisches Patentamt

European Patent Office

Office européen des brevets

(11) Veröffentlichungsnummer: **0 481 221 A1**

# (12) EUROPÄISCHE PATENTANMELDUNG

(21) Anmeldenummer: **91115635.4**

(22) Anmeldetag: **14.09.91**

(51) Int. Cl.5: **B65G 45/16**, B65G 45/12

(30) Priorität: **10.10.90 DE 9014062 U**

(43) Veröffentlichungstag der Anmeldung:
**22.04.92 Patentblatt 92/17**

(84) Benannte Vertragsstaaten:
**AT BE CH DE DK ES FR GB GR IT LI LU NL SE**

(71) Anmelder: **HOSCH-FÖRDERTECHNIK GmbH**
**Am Stadion 36**
**W-4350 Recklinghausen(DE)**

(72) Erfinder: **Schwarze, Hans-Otto**
**Esseler Strasse 170**
**W-4350 Recklinghausen(DE)**

(74) Vertreter: **Patentanwälte Wenzel & Kalkoff**
**Flasskuhle 6 Postfach 2448**
**W-5810 Witten(DE)**

(54) **Leistenabstreifer.**

(57) Die Erfindung betrifft einen Leistenabstreifer für das Abwurfende eines Gurtförderbandes im Trommelbereich. Die Abstreifleiste (6) ist nicht nur auf jeder Seite an einer federbelasteten Schwinge (7) geführt, sondern zusätzlich an einer schwenkbaren Stütze (11), deren Schwenkbereich in der Betriebsstellung begrenzt ist. Dadurch entsteht ein Leistenabstreifer, der für einen Reversierbetrieb geeignet ist bei unverändert guten Abstreifleistungen in der Betriebsstellung. Infolge der Kinematik zwischen Schwinge (7) und Stütze (11) auf jeder Seite kommt die Abstreiflippe im Reversierbetrieb mit dem Gurtband (2) außer Eingriff, der Kontakt geht jedoch nicht verloren, so daß beim Übergang vom Reversierbetrieb in den Vorwärtslauf wieder die alte Abstreifstellung erreicht wird.

Fig. 2

Die Erfindung betrifft einen Leistenabstreifer für das Abwurfende eines Gurtförderbandes im Trommelbereich, bei dem die Abstreifleiste an beiden Enden mit Hilfe jeweils einer Schwinge geführt und mit Hilfe einer Torsionsfeder im Schwenkpunkt der Schwinge elastisch an den Gurt angedrückt wird, wobei die Torsionsfeder an einem Halter abgestützt ist, dessen Abstand zu dem Gurt einstellbar ist.

Derartige Leistenabstreifer sind seit langem bekannt. Sie werden in erster Linie als Vorabstreifer eingesetzt, um eine grobe Reinigung des Gurtbandes am Abwurfende zu bewirken. Unmittelbar danach befindet sich dann der eigentliche Abstreifer, der z. B. als Lamellenabstreifer ausgebildet ist und im Gegensatz zum Leistenabstreifer über die Breite des Gurtbandes in Einzelelemente unterteilt ist.

Die Leistenabstreifer sind in der Regel so mit Hilfe der beiden Gummitorsionsfedern geführt, daß von einem Schleppbetrieb gesprochen werden kann. Das soll bedeuten, daß die Berührzone zwischen der Abstreifleiste und dem Gurtband deutlich "stromabwärts" der Schwenkachse in Form der beiden Gummitorsionsfedern liegt, die den federnden Andruck und die Gelenkigkeit bewirken. Bei einer derartigen Anordnung kann die Abstreifleiste Gurtunebenheiten, die nicht mit Hilfe eines Abstreifers entfernbar sind, und z. B. den Unebenheiten der Fügestelle ausweichen. Wird dasselbe Förderband auch im Reversierbetrieb genutzt, muß der Leistenabstreifer dieser Bauart gesondert abgehoben werden, weil anderenfalls beim Auftreten einer Unebenheit eine Verkeilung eintreten würde, in der Weise, daß die Abstreifleiste durch die Verunreinigung oder Unebenheit ohne Ausweichmöglichkeit gegen die Trommel gedrückt wird.

Selbst wenn kein Reversierbetrieb gefahren wird, kann es bei ansteigenden Förderbändern, die unter Last abgeschaltet werden, zu einem Rücklauf kommen, der einem Reversierbetrieb gleichkommt, wenn auch nicht infolge eines motorischen Antriebes. Die dabei auftretenden Kräfte genügen jedoch ebenfalls, um einen Leistenabstreifer beim Auftreffen einer hartnäckigen Verunreinigung auf die Abstreifleiste zu beschädigen.

Es ist Aufgabe der Erfindung, einen Leistenabstreifer der eingangs genannten Art so zu verbessern, daß er im Reversierbetrieb, gleich welcher Art, unbeschädigt bleibt.

Zur Lösung dieser Aufgabe schlägt die Erfindung vor, daß jeder Halter an einer schwenkbaren Stütze befestigt ist, deren Schwenkbereich in der Betriebsstellung durch einen Anschlag begrenzt ist und deren Auslenkung gegen die Wirkung einer Feder erfolgt.

Die Andrückkraft über die beiden Schwingen der Abstreifleiste gegen das Gurtband im Bereich der Trommel führt dazu, daß die Abstreifleiste mitgenommen wird, also in Gurtbandlaufrichtung bewegt wird. Dieser Bewegung folgt die Abstreifleiste solange, bis die Stütze an dem Anschlag anliegt. Dies ist die Betriebsstellung, in der es zu der Abstreifwirkung infolge der Relativbewegung zwischen Gurtband und Abstreifleiste kommt. Wird die Drehrichtung hingegen umgekehrt, wandert die Abstreifleiste in Laufrichtung des Gurtbandes im Reversierbetrieb mit und kippt dabei die Stütze vom Anschlag weg. An einem Gleichgewichtspunkt bleibt die Abstreifleiste stehen, weil dann die Rückstellkräfte der Torsionsfedern an den beiden Schwingen und die Federn, mit deren Hilfe die beiden Stützen elastisch schwenkbar sind, gerade so groß sind wie die Reibkraft in Umfangsrichtung an der Berührstelle zwischen Abstreifleiste und Gurtband im Bereich der Trommel.

Unentfernbare Unebenheiten wie z. B. die Fügestelle des Gurtbandes, die im Reversierbetrieb die Abstreifleiste passieren, drängen sie zur Seite, wobei die hauptsächliche Ausweichbewegung aus einer Verschwenkung der Stütze geschöpft wird, wenngleich eine geringe Ausweichbewegung auch im Bereich der Torsionsfeder jeder Schwinge eintreten kann. Es kommt lediglich darauf an, daß die Abstreifleiste ohne Keilwirkung deutlich von dem auf der Trommel aufliegenden Gurtband abheben kann, und zwar in einer Richtung, die eine deutliche Komponente in Umfangsrichtung der Trommel hat, jedoch selbstverständlich auch eine nennenswerte und mit wachsender Auslenkung zunehmende Komponente vertikal zur Oberfläche der Trommel. Dies ist durch eine geschickte Lage des Schwenkpunktes jeder Stütze sehr einfach erzielbar. Z. B. liegt die Mittelachse der Schwenkbewegung jeder Stütze auf einer vertikalen Ebene, die zwischen der Mittelachse der Trommel und dem Wendepunkt des Gurtbandes oder leicht außerhalb des Wendepunktes des Gurtbandes verläuft. Mit Wendepunkt ist diejenige Stelle gemeint, an der das Gurtband einen vertikalen Geschwindigkeitsvektor aufweist.

Der Leistenabstreifer gemäß der Erfindung muß zwar bei Unebenheiten und Verunreinigungen, die nicht abgestreift werden können, ausweichen, es kommt jedoch ebenso darauf an, daß er nach dem Ausweichen zurückfällt in einen Berührkontakt der Abstreifleiste mit dem Gurtband im Bereich der Trommel. Denn nur dann ist sichergestellt, daß bei der Umstellung vom Reversierbetrieb zum Normalbetrieb die Abstreifleiste wieder in die Betriebslage mitgenommen wird, und zwar aufgrund der Reibkraft in der Gleichgewichtslage des Reversierbetriebes. Die Federhärten und Schwenkachsen müssen jeweils so gewählt sein, daß es selbsttätig auch bei geringen Reibwerten zu diesem Wechsel der Betriebsstellung bei Drehrichtungsumkehr kommt. Bei feuchtem Gut bzw. bei Niederschlägen auf Gurtförderer im Freien kann es sehr geringe Reibwerte geben, wenn darüber hinaus das zu fördernde Gut bei Nässe breiig wird und damit eine gewisse Schmierwirkung aufweist.

Besonders gute Voraussetzungen für die sichere Umstellung bei der Änderung der Drehrichtung werden dann erzielt, wenn die Schwenkachse jeder Schwinge in deutlichem Abstand von der Verbindungslinie zwischen der Berührstelle der Abstreifleiste und der Trommel und der Mittelachse der Schwenkbewegung der Stütze liegt. Die Berührstelle und die beiden Schwenkachsen bilden in der Seitenansicht einen Kniehebel, dessen gestecktere Lage der Betriebsstellung im Reversierbetrieb und dessen angewinkelte Lage der Betriebsstellung im Normalbetrieb entspricht. Je nach Öffnungswinkel des genannten Kniehebels, der auf jeder Seite aus der Schwinge und der Stütze besteht, können jeweils kinematische Verhältnisse hervorgerufen werden, die auch unter ungünstigsten Bedingungen den automatischen Wechsel der Betriebsstellung bei Drehrichtungsumkehr herbeiführen. Eine entsprechende Kinematik ist dadurch gekennzeichnet, daß ein senkrecht auf der Verbindungslinie zwischen der Berührstelle von Abstreifleiste und Trommel und der Mittelachse stehender Vektor zu der Schwenkachse der Schwinge gegen die Laufrichtung der Trommel im Normalbetrieb weist.

Hinsichtlich Reinigungswirkung und minimaler Beschädigungsgefahr ergibt sich dann ein Optimum, wenn im Normalbetrieb die Berührzone der Abstreifleiste in Drehrichtung der Trommel gesehen hinter der Verbindungslinie zwischen der Mittelachse der Trommel und der Schwenkachse der Schwinge und nach der Umkehr der Drehrichtung im Reversierbetrieb unter derselben Blickrichtung davor liegt. Wenn die Abstreifleiste flächig an dem Gurtband anliegt, führt der Wechsel der Betriebsstellung beim Übergang vom Normalbetrieb auf den Reversierbetrieb dazu, daß dann die Kante der Fläche an dem Gurtband anliegt bzw. eine benachbarte Fläche, weil die Abstreifleiste beim Wechsel der Betriebsstellung eine gewisse Winkelverschwenkung erfährt.

Ein Ausführungsbeispiel der Erfindung, das in der Zeichnung dargestellt ist, wird nachfolgend näher erläutert; in der Zeichnung zeigen:

Fig. 1   eine Stirnansicht eines Leistenabstreifers gemäß der Erfindung und

Fig. 2   eine Seitenansicht des Abstreifers in leicht vergrößerter Darstellung.

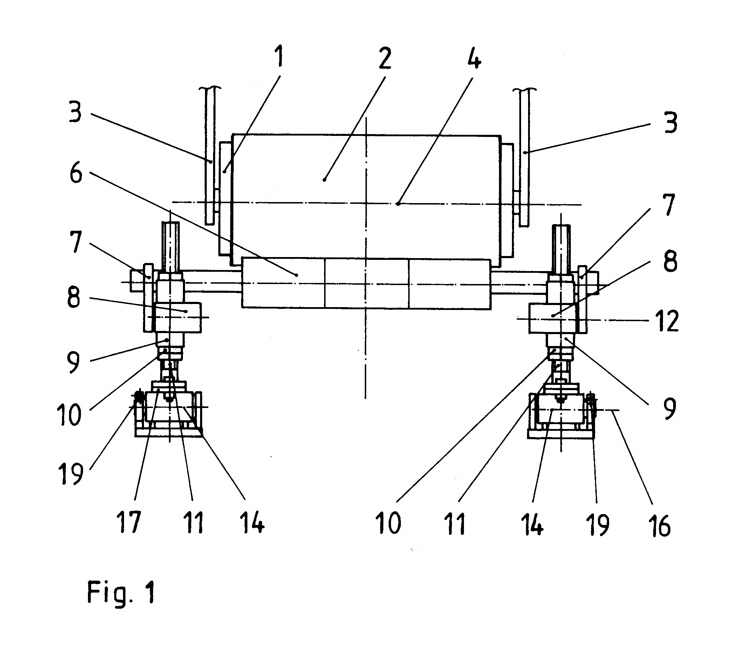

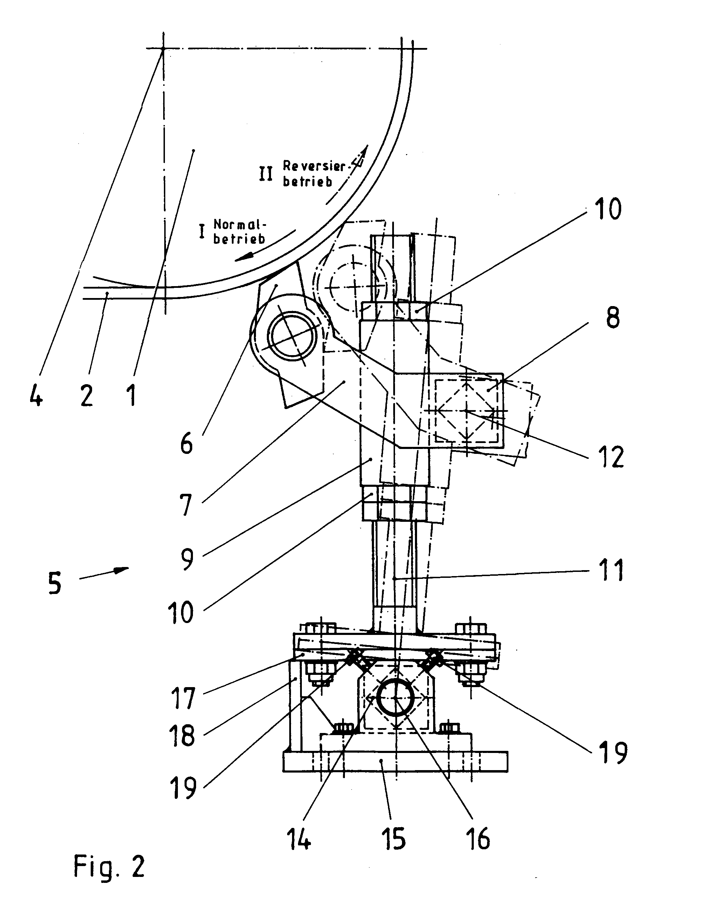

Der in den Fig. 1 und 2 wiedergegebene Leistenabstreifer ist am Abwurfende einer Förderanlage angebracht, die an dieser Stelle eine Trommel trägt, über die ein Gurtband 2 umläuft und dabei vom Obertrum zum Untertrum wechselt. Die Trommel 1 ist in einer seitlichen Aufhängung 3 gelagert, die auch abweichend davon horizontal verlaufen kann. An ihr ist die Trommel 1 gelagert, so daß sie um eine Achse 4 rotieren kann.

In der Fig. 2 ist im rechten unteren Quadranten der Trommel 1 der Leistenabstreifer 5 angebracht, wobei die Verbindung zu dem Gurtförderer nicht wiedergegeben ist, sondern davon ausgegangen wird, daß an entsprechender Stelle eine Konsole oder Traverse vorhanden ist, um den Leistenabstreifer 5 fachgerecht zu befestigen.

Der Leistenabstreifer 5 besteht aus einer Abstreifleiste 6, die über die gesamte Breite des Gurtbandes 2 reicht. An den beiden Enden befindet sich jeweils eine Schwinge 7, die mit Hilfe einer Gummitorsionsfeder 8 in einem als Hülse ausgebildeten Halter 9 schwenkbar und federbelastet gehalten ist. Die Gummitorsionsfeder 8 ist so gewählt und eingestellt, daß in der in der Fig. 2 ausgezogenen Betriebsstellung bei Normalbetrieb die Abstreifleiste 6 mit leichtem Druck an dem Gurtband 2 anliegt. Die Vorspannung kann dadurch eingestellt werden, daß der Abstand des jeweiligen Halters 9 zur Trommel 1 bzw. zum Gurtband 2 mit Hilfe von zwei Muttern 10 verändert wird, die auf dem Gewindeteil einer Stütze 11 aufgeschraubt sind. Jede Stütze 11 ist ihrerseits in einer Gummitorsionsfeder 14 schwenkbar geführt und federgestützt; in der Fig. 2 ist in strichpunktierter Linie eine verschwenkte Lage angedeutet.

Zwischen jeder Stütze 11 und der zugeordneten Gummitorsionsfeder 14 befindet sich ein Flansch 17, der in der Betriebsstellung im Normalbetrieb auf einem Anschlag 18 aufliegt, der Bestandteil einer Sockelplatte 15 ist. Die Sockelplatte 15 wird, wie bereits erwähnt, an einer Konsole oder an einer Quertraverse der Förderanlage angeschraubt.

Jede Gummitorsionsfeder besteht aus einem im Querschnitt quadratischen Gehäuse und einem im Querschnitt ebenfalls quadratischen Kern, und beide Teile sind in der Grundstellung um 45° zueinander verschwenkt. Die dann entstehenden annähernd dreieckigen Eckräume sind mit Gummistücken gefüllt, deren Volumen am größten ist, wenn beide Teile zueinander um 45° verdreht angeordnet sind, also sich in der Grundstellung befinden. Die Auslenkung des einen Teils gegenüber dem anderen in der einen oder anderen Richtung führt zum Aufbau von Rückstellkräften, was als Federung ausgenutzt wird.

In der Fig. 2 ist zu erkennen, daß auf die Schwenkachse 16 der hier angeordneten Gummitorsionsfeder 14 zwei Klemmschrauben 19 weisen, mit denen das Kernstück der Gummitorsionsfeder 14 in beliebiger Lage fixiert werden kann. In der Regel wird es so eingestellt, daß die Grundstellung der Gummitorsionsfeder 14 mit der Anlage des Flansches 17 an dem Anschlag 18 übereinstimmt. Gegebenenfalls kann in dem Flansch 17 ein Gewindeloch mit einer eingeschraubten Stellschraube (nicht dargestellt) vorgesehen sein, mit deren Hilfe die Anschlaglage einstellbar ist. Die Stellschraube setzt dann statt des Flansches 17 auf dem Flansch 18 auf.

Die Gummitorsionsfeder 8 an der Schwinge 7 ist bei dem dargestellten Ausführungsbeispiel nicht in derselben Weise einstellbar wie die Gummitorsionsfeder 14 für die Stütze 11. Vielmehr wird die Federvorspannung indirekt über die Höheneinstellung des Halters 9 gegenüber der Stütze 11 durch Auf- oder Niederschrauben der Muttern 10 bestimmt. Es ist dabei unerheblich, daß damit auch eine Höheneinstellung einhergeht. Normalerweise ist die Abstreifleiste 6 aus Hartgummi gebildet, so daß es nicht auf eine exakte Positionierung gegenüber dem Gurtband 2 ankommt, sondern sich vielmehr in jeder Einstellung eine neue Berührzone durch Abnutzung selbsttätig ausbildet. Die Abstreifleiste 6 kann im übrigen in zwei Positionen durch Schwenken um 180° benutzt werden, so daß nach der Abnutzung der einen Seite noch die andere Seite durch einfaches Verdrehen verwendet werden kann.

In dem dargestellten Ausführungsbeispiel sind die Stützen 11 auf der Innenseite der Schwingen 7 dargestellt. Wenn die Verhältnisse so sind, daß bei der Vorreinigung durch den Leistenabstreifer 5 die Stützen 11 und damit die Gewindegänge der Spindelabschnitte dem Abstreifgut ausgesetzt sind, können die Stützen 11 auch auf der jeweiligen Außenseite der Schwingen 7 angeordnet sein, so daß sie nicht mehr einem Schmutzbefall unterworfen sind. Im übrigen können auf die freien Enden der Stützen 11 Kunststoffkappen oder dergleichen aufgesetzt werden, so daß zumindest auf dieser Seite ein Staub- und Feuchtigkeitsschutz vorhanden ist.

Die Schwenkachsen 12 der Schwingen 7 und 16 der Stützen 11 sind in der Fig. 1 wiedergegeben, um die Lage zu kennzeichnen. Selbstverständlich kann jede Schwinge 7 und jede Stütze 11 einzeln bewegt werden, ohne daß die jeweils andere Seite der Bewegung folgt. Der gesamte Leistenabstreifer 5 ist also in sich nicht so starr, daß immer nur eine achsparallele Auslenkung möglich ist. Vielmehr bewegt sich im wesentlichen nur die eine Seite, wenn auf dieser Seite beispielsweise eine nicht entfernbare Verunreinigung die Abstreifzone passiert.

**Patentansprüche**

1. Leistenabstreifer für das Abwurfende eines Gurtförderbandes im Trommelbereich, bei dem die Abstreifleiste an beiden Enden mit Hilfe jeweils einer Schwinge geführt und mit Hilfe einer Torsionsfeder im Schwenkpunkt der Schwinge elastisch an den Gurt angedrückt wird, wobei die Torsionsfeder an einem Halter abgestützt ist, dessen Abstand zu dem Gurt einstellbar ist, dadurch **gekennzeichnet**, daß der Halter (9) an einer schwenkbaren Stütze (11) befestigt ist, deren Schwenkbereich in der Betriebsstellung durch einen Anschlag (18) begrenzt ist und deren Auslenkung gegen die Wirkung einer Feder (14) erfolgt.

2. Leistenabstreifer nach Anspruch 1, dadurch **gekennzeichnet**, daß die Stütze (11) als Gewindespindel und der Halter (9) als Hülse ausgebildet sind, deren Lage auf der Spindel mit Hilfe von Muttern (10) einstellbar ist.

3. Leistenabstreifer nach Anspruch 1 oder 2, dadurch **gekennzeichnet**, daß die Mittelachse (16) der Schwenkbewegung der Stütze (11) auf einer vertikalen Ebene liegt, die zwischen der Mittelachse (4) der Trommel (1) und dem Wendepunkt des Gurtbandes (2) oder leicht außerhalb des Wendepunktes des Gurtbandes verläuft.

4. Leistenabstreifer nach einem dar vorhergehenden Ansprüche, dadurch **gekennzeichnet**, daß zur Federung und zur schwenkbaren Lagerung jeder Stütze (11) eine Gummitorsionsfeder vorgesehen ist.

5. Leistenabstreifer nach einem der vorhergehenden Ansprüche, dadurch **gekennzeichnet**, daß die Schwenkachse (12) jeder Schwinge (7) in deutlichen Abstand von der Verbindungslinie zwischen der Berührstelle der Abstreifleiste (6) mit der Trommel (1) und der Mittelachse (16) der Schwenkbewegung der Stütze (11) liegt.

6. Leistenabstreifer nach Anspruch 5, dadurch **gekennzeichnet**, daß ein senkrecht auf der Verbindungslinie stehender Vektor zu der Schwenkachse (12) gegen die Laufrichtung der Trommel (1) im Normalbetrieb weist.

7. Leistenabstreifer nach einem der vorhergehenden Ansprüche, dadurch **gekennzeichnet**, daß der Anschlag (18) einstellbar ist.

8. Leistenabstreifer nach einem der Ansprüche 4 - 7, dadurch **gekennzeichnet**, daß die Vorspannung der Gummitorsionsfeder (14) gegenüber dem Anschlag (18) bzw. die Nullage der Gummitorsionsfeder (14) einstellbar ist.

9. Leistenabstreifer nach einem der vorhergehenden Ansprüche, dadurch **gekennzeichnet**, daß die Abstreifleiste (6) zweiseitig nutzbar ist.

**10.** Leistenabstreifer nach einem der vorhergehenden Ansprüche, dadurch **gekennzeichnet**, daß die Abstreifleiste (6) das Gurtband (2) im Normalbetrieb flächig berührt.

**11.** Leistenabstreifer nach einem der vorhergehenden Ansprüche, dadurch **gekennzeichnet**, daß im Normalbetrieb die Berührzone der Abstreifleiste (6), in Drehrichtung der Trommel (1) gesehen, hinter der Verbindungslinie zwischen der Mittelachse (4) der Trommel (1) und der Schwenkachse (12) der Schwinge (7) und nach der Umkehr der Drehrichtung im Reversierbetrieb unter derselben Blickrichtung davor liegt.

Fig. 1

Fig. 2

# EUROPÄISCHER RECHERCHENBERICHT

Nummer der Anmeldung

## EP 91 11 5635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 696 389  (SCHWARZE)  <br> * das ganze Dokument * * | 1 | B 65 G 45/16 <br> B 65 G 45/12 |
| X | US-A-4 633 999  (PERNECZKY)  <br> * das ganze Dokument * * | 1 | |
| A | | 2,4,7 | |
| A | EP-A-0 004 809  (FIVES-CAIL BABCOCK)  <br> * das ganze Dokument * * | 1,2,3,4 | |
| A | GB-A-1 420 439  (WARD)  <br> * Abbildungen * * | 1,9 | |
| P,X | DE-U-9 014 062  (HOSCH-FÖRDERTECHNIK)  <br> * das ganze Dokument * * | 1-11 | |

|  | RECHERCHIERTE SACHGEBIETE (Int. Cl.5) |
|---|---|
|  | B 65 G |

**Der vorliegende Recherchenbericht wurde für alle Patentansprüche erstellt**

| Recherchenort | Abschlußdatum der Recherche | Prüfer |
|---|---|---|
| Den Haag | 13 Januar 92 | OSTYN T.J.M. |